# FASCICULE DE BREVET EUROPEEN

(11) **EP 4 457 076 B1**
(45) Date de publication et mention de la délivrance du brevet: **12.11.2025**
(21) Numéro de dépôt: 22844160.6
(22) Date de dépôt: 23.12.2022
(51) Int. Cl.: B29C 49/56, B29C 49/06, B29C 49/36, B29C 49/48, B29K 67/00, B29L 31/00

(54) **DISPOSITIF DE MOULAGE, PAR SOUFFLAGE OU ÉTIRAGE-SOUFFLAGE, DE RÉCIPIENTS EN MATIÈRE THERMOPLASTIQUE**
VORRICHTUNG ZUM BLASFORMEN ODER STRECKBLASFORMEN VON THERMOPLASTISCHEN BEHÄLTERN
DEVICE FOR BLOW-MOULDING OR STRETCH-BLOW-MOULDING THERMOPLASTIC CONTAINERS

(30) Priorité: 29.12.2021 FR 2114622
(43) Date de publication de la demande: 06.11.2024
(73) Titulaire: Sidel Participations, 76930 Octeville-sur-Mer (FR)
(72) Inventeur: MICHEL, Jocelyn, 76930 OCTEVILLE-SUR-MER (FR); LECOMTE, Frédéric, 76930 OCTEVILLE-SUR-MER (FR); SAVARY, Cyrille, 76930 OCTEVILLE-SUR-MER (FR)
(74) Mandataire: Sidel Group
(86) Numéro de dépôt international: PCT/EP2022/087798
(87) Numéro de publication internationale: WO 2023/126366

(56) Documents cités:
- EP-A1- 2 977 171
- EP-A1- 2 977 179
- US-A1- 2010 203 185
- US-A1- 2013 115 326

## Description

### Domaine technique de l'invention

- La présente invention concerne un dispositif de moulage pour une machine de fabrication de récipients, notamment des bouteilles, en matière thermoplastique par soufflage ou par étirage-soufflage d'une préforme préalablement chauffée et plus particulièrement à la commande d'ouverture des moules portefeuilles. La présente invention a trait à la commande d'ouverture des moules portefeuilles et concerne plus particulièrement les perfectionnements apportés aux dispositifs de moulage de récipients à partir de préformes en matériau thermoplastique par soufflage ou étirage-soufflage. De tels dispositifs selon l'art antérieur sont décrits dans les documents EP2977179A1, EP2977171A1 et US2013/115326A1.

### Arrière-plan technique

On connaît de l'état de la technique des dispositifs de moulage destinés à équiper des machines de fabrication de récipients, notamment mais non exclusivement des machines dites "rotatives" comportant un carrousel circonférentiellement pourvu d'un nombre déterminé de postes de soufflage identiques. La fabrication de récipients en matière plastique, tels que des bouteilles, flacons, etc., y est effectuée à partir de préformes ou d'ébauches préalablement chauffées dans un four de conditionnement thermique. Selon le nombre d'empreinte des moules, une ou plusieurs préformes sont ainsi amenée(s) à un poste de la machine pour être introduite(s) dans un dispositif de moulage auquel sont associés des moyens de soufflage ou d'étirage-soufflage. De tels dispositifs de moulage comportent au moins un moule constitué de deux demi-moules supportés respectivement par deux porte-moules qui sont montés mobiles l'un par rapport à l'autre. Chaque demi-moule est généralement reçu dans un logement complémentaire du porte-moule associé auquel le demi- moule est fixé de manière amovible par l'intermédiaire de moyens de fixation afin de permettre un démontage en vue d'un changement du moule, en particulier pour procéder à des fabrications de récipients de formes et/ou de dimensions différentes ou encore à leur remplacement en cas d'endommagement et/ou d'usure des demi-moules. Pour certaines formes de bouteilles, et plus particulièrement pour certaines formes de fond de bouteilles, ledit dispositif de moulage comporte un moule en trois parties, à savoir deux demi-moules pour le corps du récipient et un fond de moule pour le fond du récipient. Le passage d'une position dite de fermeture à une position dite d'ouverture des demi-moules, et inversement, est assuré par un système d'actionnement, et le passage du mouvement de monte et de baisse du fond de moule est assuré par une liaison mécanique entre au moins un demi-moule et le fond de moule de telle sorte que la position dite de fermeture et la position dite d'ouverture du moule provoque la montée et respectivement la baisse du fond de moule.

Ainsi, ce dispositif de moulage comporte :
- deux demi-moules qui sont mobiles transversalement par rapport à un support fixe entre une position jointe de moulage et une position écartée d'insertion d'une préforme ou d'extraction d'un récipient fini ;
- un fond de moule qui est mobile verticalement entre une position inférieure d'insertion d'une préforme ou d'extraction d'un récipient fini et une position supérieure de moulage.

Le passage d'une position jointe de moule à une position écartée des deux demi-moules ou inversement, autrement dit, le passage d'une position fermée à une position ouverte et inversement, est assuré par un mécanisme comprenant deux biellettes couplées chacune en rotation à l'avant (côté moule) à un demi-moule respectif, et réunies à l'arrière (côté carrousel) en étant mutuellement articulées autour d'un axe commun. Un système d'actionnement commande le déplacement radial de l'axe commun des biellettes. Ce système comprend un levier (appelé bielle dans le brevet) portant, à une extrémité, un galet circulant sur une came, et une manivelle (appelée bras de commande) solidaire de la bielle par une première extrémité, et couplée par une extrémité opposée à l'axe commun d'articulation des biellettes.

Le mouvement radial du galet, suivant la position angulaire du moule par rapport au bâti du carrousel, provoque le pivotement solidaire du levier et de la manivelle autour de leur axe de rotation, et le déplacement, suivant un arc de cercle, de l'axe commun des biellettes, qui provoque l'ouverture (ou la fermeture) du compas et, par voie de conséquence, la fermeture respective (ou l'ouverture) du moule.

Le passage du mouvement de monte et de baisse du fond de moule est également assuré par un mécanisme comprenant une came et un galet.

Dans ce type de dispositif de moulage, l'ouverture et la fermeture des deux demi-moules est commandée par un système d'actionnement et la descente et la montée du fond de moule est commandée par un second système d'actionnement distinct du premier.

Usuellement, ces systèmes d'actionnement sont des mécanismes comprenant notamment un galet, monté par l'intermédiaire de biellettes, sur le dispositif de moulage mobile en rotation et suivant une came montée solidaire du bâti de la machine posée sur le sol.

L'inconvénient de ces mécanismes à came et galet est de générer des vibrations lors des différents mouvements de coopération entre la came et le galet. Dès lors, multiplier ce type de mécanisme augmente les vibrations dans la machine, lesdites vibrations induites par ces mécanismes pouvant provoquer un vieillissement prématuré des pièces de la machine.

Par ailleurs, on connait également la demande de brevet US20100203185 qui divulgue un poste de moulage, dans lequel le premier demi-moule est monté rigidement sur une console, et le deuxième demi-moule est monté mobile par rapport à la console de façon à lui permettre de pivoter. Le fond de moule est situé en dessous des deux demi-moules. Le deuxième demi-moule effectue un mouvement de pivotement par rapport à un arbre du poste de moulage. L'arbre du poste de moulage s'étend dans une direction verticale.

Pour commander les mouvements du deuxième demi-moule, celui-ci est relié à un arbre d'entraînement par un levier d'accouplement, ledit arbre d'entrainement étant distinct de l'arbre du poste de moulage et s'étendant parallèlement à ce dernier.

Le mouvement du fond de moule est guidé par un galet dans un chemin de came fixe, qui s'étend dans une partie inférieure et à l'intérieur de la console.

Pour commander les mouvements de positionnement du fond de moule, celui-ci est reliée par une bielle réglable à un levier d'accouplement qui est lui-même relié à l'arbre d'entraînement.

Le mouvement de fermeture du poste de moulage est commandé par la rotation de l'arbre d'entraînement qui commande la fermeture du deuxième demi-moule et le pivotement du levier d'accouplement. Ce levier est entrainé en rotation et amène le galet fixé sur le fond de moule à être poussé par la bielle réglable le long du chemin came de la console. Cela amène le fond de moule à effectuer à la fois un mouvement de rotation et un mouvement de translation transversalement vers les deux demi-moules.

L'inconvénient du poste de moulage divulgué dans la demande de brevet US20100203185 est l'utilisation d'une bielle réglable pour commander simultanément l'ouverture/la fermeture du second demi-moule et la descente/remonté du fond de moule. En effet, un mauvais réglage de l'utilisation de ladite bielle peut générer un défaut d'accompagnement entre le mouvement du demi-moule et le mouvement du fond de moule qui pourrait engendrer une usure prématurée des demi-moules et/ou du fond de moule lors de leurs accouplements répétés.

Il existe donc un besoin pour un dispositif de moulage dont l'architecture procure une meilleure précision des mouvements des demi-moules et du fond de moule et permet de limiter les réglages ainsi que l'usure des pièces mobiles du dispositif.

### Résumé de l'invention

Un objectif de l'invention est donc de proposer un mécanisme dont l'architecture permette de limiter les réglages, de sorte à limiter la fatigue et l'usure des pièces mobiles.

Un autre objectif de l'invention est de proposer un mécanisme garantissant une meilleure précision dans la commande d'ouverture et de fermeture du moule et la monte et baisse du fond de moule.

À cet effet, l'invention propose, selon un premier objet, un dispositif de moulage de récipients à partir de préformes en matériau thermoplastique par moulage avec soufflage ou étirage-soufflage, ledit dispositif comportant un moule d'axe vertical, en trois parties, à savoir deux demi-moules pour le corps du récipient et un fond de moule pour le fond du récipient, le passage d'une position dite de fermeture à une position dite d'ouverture des demi-moules et inversement, est assuré par un système d'actionnement, et le mouvement de monte et de baisse du fond de moule est assuré par une liaison mécanique entre au moins un demi-moule et le fond de moule de telle sorte que la fermeture et l'ouverture du moule provoque la montée et respectivement la baisse du fond de moule ; ledit dispositif étant remarquable en ce que :
- une première extrémité de ladite liaison mécanique est reliée à l'un des demi-moules, et l'extrémité opposée de la liaison mécanique est reliée à une came cylindrique positionnée en dessous du fond de moule,
- la came cylindrique est montée mobile en rotation autour d'un axe vertical, ladite rotation de la came cylindrique étant obtenue par le mouvement d'ouverture ou de fermeture de l'un des demi-moules, et
- la came cylindrique coopère avec au moins un galet monté fou sur un support vertical à l'extrémité supérieure duquel est solidarisé le fond de moule, le support étant apte à se déplacer le long d'un axe vertical de sorte que la rotation de la came cylindrique entraine en translation verticale le fond de moule.

On comprend bien que ce dispositif permet de lier et de synchroniser le mouvement d'ouverture et de fermeture du moule au mouvement de monte et de baisse du fond de moule en éliminant le nombre de réglage.

Diverses caractéristiques supplémentaires peuvent être prévues, seules ou combinées. Ainsi, par ex. :
- le support comprend des moyens pour se déplacer le long de son axe vertical qui est parallèle à l'axe du moule et à l'axe de la came cylindrique ;
- la liaison mécanique comprend deux parties articulées :
   - une tige dont l'une des extrémités est fixée à l'un des demi-moules,
   - une bielle de transmission articulée à une première extrémité à la came cylindrique et l'extrémité opposée à la tige ;
   - la tige est solidaire d'une paroi externe du demi-moule et s'étend parallèlement à cette dernière en faisant saillie de l'extrémité inférieure dudit demi-moule ;
   - la bielle de transmission présente une forme générale de S ou de Z et comprend deux branches horizontales reliées par une branche inclinée, la première branche horizontale dont l'extrémité libre est articulée à la génératrice de la came cylindrique, la seconde branche horizontale s'étend au-dessus de la première branche horizontale et dont l'extrémité libre est articulée à la tige ;

De la sorte à permettre d'optimiser la position de moule par rapport au fond de moule pour obtenir un bon encombrement et une bonne rigidité de la liaison mécanique
- la came cylindrique comprend un chemin de came constitué d'un évidement dans la paroi de la came cylindrique et dans lequel est apte à se déplacer le galet monté fou ;
- le chemin de came comprend un profil continu qui se compose d'au moins trois parties :
   - une des extrémités dudit profil comprend une première partie sensiblement horizontale par rapport à l'axe vertical qui correspondant au verrouillage et déverrouillage du fond de moule,
   - l'autre extrémité dudit profil comprend une deuxième partie sensiblement horizontale par rapport à l'axe vertical,
   - une troisième partie comprise entre les deux extrémités est sensiblement inclinée par rapport à l'axe verticale, cette partie correspond au mouvement de monte et de baisse du support sur lequel est monté le fond de moule ;
   - le système d'actionnement assurant le mouvement d'ouverture et de fermeture des demi-moules est un moteur électrique ;
   - le système d'actionnement assurant le mouvement d'ouverture et de fermeture des demi-moules est un mécanisme mécanique réalisé par une came et un galet.

Il est proposé, en deuxième lieu, une liaison mécanique pour monter et respectivement baisser un fond de moule par rapport à un demi-moule d'un dispositif de moulage de récipients à partir de préformes en matériau thermoplastique par moulage avec soufflage ou étirage-soufflage, le dispositif comportant un moule d'axe vertical, en trois parties, à savoir deux demi-moules pour le corps du récipient et un fond de moule pour le fond du récipient ; ladite liaison mécanique est remarquable en ce que :
- une première extrémité de ladite liaison mécanique est apte à être reliée à l'un des demi-moules, et l'extrémité opposée de la liaison mécanique est reliée à une came cylindrique apte à être positionnée en dessous du fond de moule,
- la came cylindrique est montée mobile en rotation autour d'un axe vertical, ladite rotation de la came cylindrique étant obtenue par le mouvement d'ouverture ou de fermeture de l'un des demi-moules, et
- la came cylindrique étant apte à coopérer avec un galet monté fou sur un support vertical à l'extrémité supérieure duquel est solidarisé le fond de moule, ledit support étant apte à se déplacer le long d'un axe vertical de sorte que la rotation de la came cylindrique entraine en translation verticale le fond de moule.

Diverses caractéristiques supplémentaires peuvent être prévues, seules ou combinées. Ainsi, par ex. :
- le support comprend des moyens pour se déplacer le long de son axe vertical qui est parallèle à l'axe de la came cylindrique.
- la liaison mécanique comprend deux parties articulées :
   - une tige dont l'une des extrémités est apte à être fixée à l'un des demi-moules,
   - une bielle de transmission articulée à une première extrémité à la came cylindrique et l'extrémité opposée à la tige ;
   - la bielle de transmission présente une forme générale de S ou de Z et comprend deux branches horizontales reliées par une branche inclinée, la première branche horizontale dont l'extrémité libre est articulée à la génératrice de la came cylindrique, la seconde branche horizontale s'étend au-dessus de la première branche horizontale et dont l'extrémité libre est articulée à la tige ;
   - la came cylindrique comprend un chemin de came constitué d'un évidement dans la paroi de la came cylindrique et dans lequel est apte à se déplacer le galet monté fou ;
   - le chemin de came comprend un profil continu qui se compose d'au moins trois parties :
      - une des extrémités du profil comprend une première partie sensiblement horizontale par rapport à l'axe vertical qui correspondant au verrouillage et déverrouillage du fond de moule,
      - l'autre extrémité dudit profil comprend une deuxième partie sensiblement horizontale par rapport à l'axe vertical,
      - une troisième partie comprise entre les deux extrémités est sensiblement inclinée par rapport à l'axe verticale, cette partie correspond au mouvement de monte et de baisse du support sur lequel est monté le fond de moule.

### Brève description des figures

D'autres caractéristiques et avantages de l'invention apparaitront au cours de la lecture de la description détaillée qui va suivre pour la compréhension de laquelle on se reportera aux dessins annexés que nous décrivons brièvement par la suite.
[Fig.1] est une vue d'un dispositif de moulage dont le moule est en position ouverte, c'est-à-dire que les deux demi-moules ainsi que le fond de moule sont écartés les uns des autres,
[Fig.2] est une vue d'une liaison mécanique reliant un demi-moule et un fond de moule,
[Fig.3] est une vue éclatée de la liaison mécanique,
[Fig.4] est une vue d'un dispositif de moulage dont le moule est dans une position intermédiaire, c'est-à-dire que les deux demi-moules ainsi que le fond de moule sont soit en train de se fermer soit en train de s'ouvrir,
[Fig.5] est une vue d'un dispositif de moulage dont le moule est en position fermée, c'est-à-dire que les deux demi-moules ainsi que le fond de moule sont en contact les uns des autres.

### Description détaillée de l'invention

Dans la suite de la description, des éléments présentant une structure identique ou des fonctions analogues seront désignés par une même référence.

On adoptera à titre non limitatif les orientations longitudinale, verticale et transversale en référence au trièdre (L, V, T) représenté sur les figures.

Par convention, les directions longitudinale et transversale sont déterminées de manière fixe par rapport aux dispositifs de moulage de sorte que la position ouverte ou fermée occupée est sans incidence sur lesdites orientations.

On utilisera également à titre non limitatif les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale.

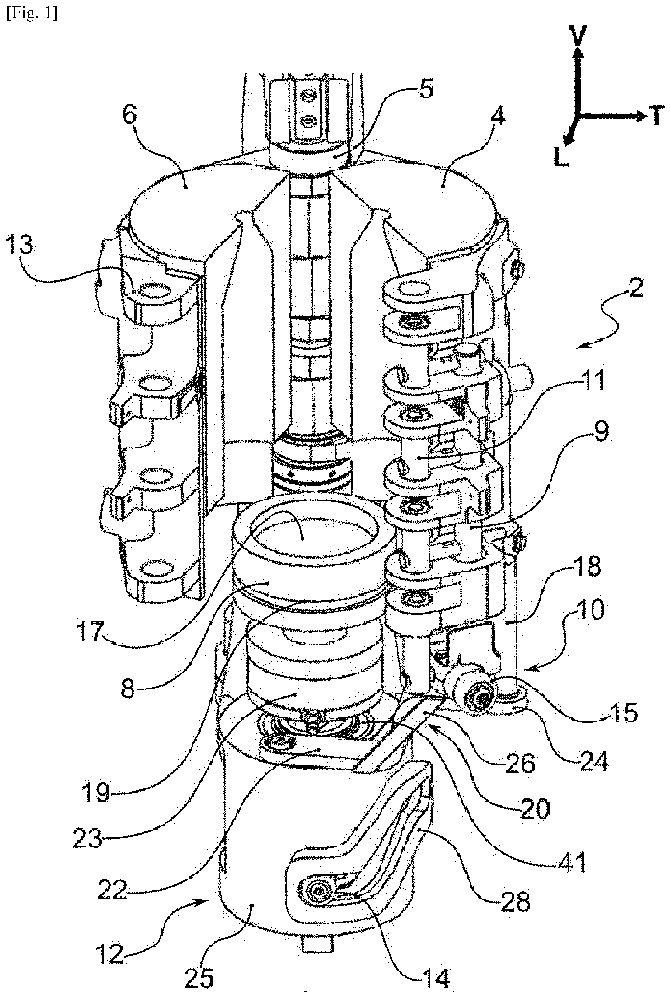

On a représenté aux figures 1 et suivantes, un exemple de réalisation d'une unité de moulage d'au moins un récipient à partir d'une préforme en matière thermoplastique.

L'unité de moulage est notamment susceptible d'être montée par l'intermédiaire d'une console 3 sur un bâti d'une machine (non représentée) de fabrication de récipients de type rotative et qui est encore appelée "souffleuse".

L'unité de moulage comprend un des dispositifs 1 de moulage par soufflage ou par étirage-soufflage de la machine qui comporte une série de "n" dispositifs 1 de moulage, répartis angulairement de manière régulière autour d'un carrousel de l'unité de moulage.

Dans un autre mode de réalisation, l'unité de moulage comprend un des dispositifs 1 de moulage répartis de manière linéaire sur un bâti.

Comme on peut le voir sur la [Fig.1], le dispositif 1 de moulage comporte un moule 2 de type portefeuille comportant un premier demi-moule 4 dit droit et un second demi-moule 6 dit gauche, et un fond 8 de moule.

Chaque demi-moule 4, 6 comprend un porte-coquille supporté par le porte-moule respectif et une coquille munie sur sa face interne d'une demi-empreinte du récipient à obtenir et solidarisable de façon amovible à son porte-coquille par des moyens de fixation rapide, la coquille et le porte-coquille étant conformés de façon complémentaire pour être en contact mutuel au moins partiel avec conduction thermique.

Traditionnellement, chaque demi-moule 4, 6 portent une demi-coquille comprenant une empreinte qui est destinée à former par moulage une moitié du corps du récipient. Cette structure de demi-moule est décrite et illustrée dans le document FR2733176.

Les demi-moules 4, 6 sont montés articulés l'un par rapport à l'autre autour d'une charnière 5 commune solidaire de la console 3.

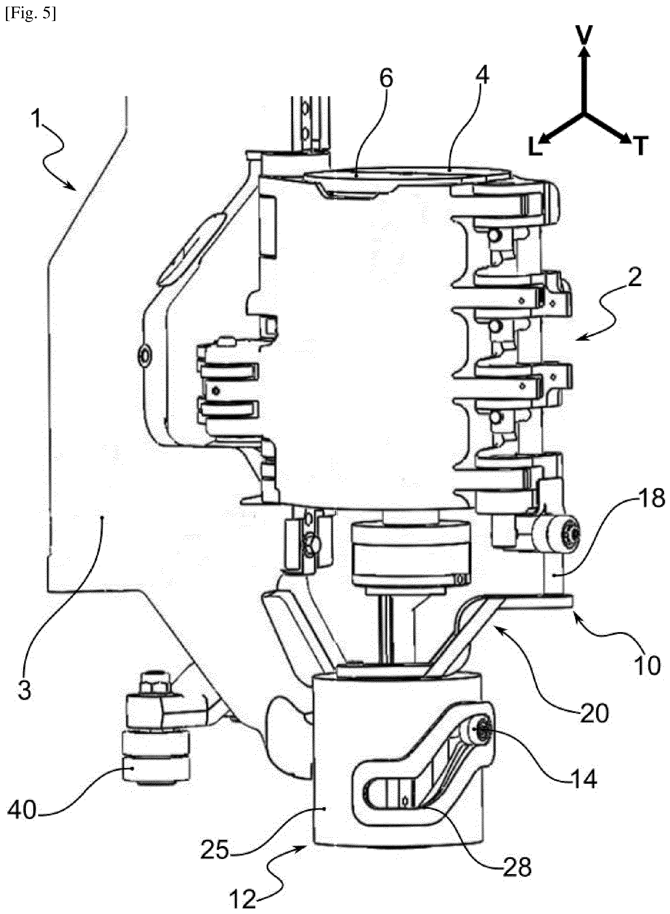

Comme représenté à la [Fig.1], le dispositif 1 de moulage est en position ouverte dans laquelle les demi-moules 4,6 sont écartés angulairement l'un de l'autre pour introduire ou pour extraire, la préforme chaude ou le récipient finalisé, et comme représenté à la [Fig.5], le dispositif 1 de moulage est en position fermée où les faces des demi-moules sont appliquées l'une contre l'autre pour former un plan de joint.

Les demi-moules sont commandés sélectivement en déplacement entre lesdites positions ouverte et fermée par l'intermédiaire d'un système d'actionnement.

Selon un premier mode de réalisation, le système d'actionnement, qui commande l'ouverture et la fermeture des demi-moules, est constitué par des moyens à biellettes articulées situées à l'arrière du dispositif 1 de moulage, entraînées par un galet 40 représenté [Fig.5] coopérant avec une came fixe (non représentée). Ce système d'actionnement à came et galet est décrit et illustré par exemple dans les documents FR2653058, FR2681552 ou FR3027528.

Selon un autre mode de réalisation, le système d'actionnement assurant le mouvement d'ouverture et de fermeture des demi-moules est constitué par un moteur électrique qui peut être relié à des moyens à biellettes articulées situées à l'arrière du dispositif de moulage ou qui peut être relié à la charnière reliant les deux demi-moules (non représenté).

Il est bien évident que ledit système d'actionnement assurant le mouvement d'ouverture et de fermeture des demi-moules pourra consister dans tout autre système d'actionnement bien connu de l'homme du métier sans pour autant sortir du cadre de l'invention.

Comme on le voit sur les figures, le demi-moule droit 4 porte, sur son bord extérieur, un dispositif de verrouillage 7 du moule, qui comprend une tige 9 coulissante sur laquelle est fixée une série de pênes 11 en forme de « L » propre à venir se loger, en position fermée dans des gâches 13 formées sur le demi-moule gauche 6.

A l'une des extrémités de la tige 9 est fixé un galet 15 qui coopère avec une came (non représentée) pour commander le verrouillage ou le déverrouillage des deux demi-moules 4, 6 lors du moulage de récipients à partir de préformes.

Il va de soi que le dispositif de verrouillage du moule pourra consister en tout autre dispositif de verrouillage équivalent bien connu de l'homme du métier sans pour autant sortir du cadre de l'invention.

Par ailleurs, ledit moule comprend un fond 8 de moule placé sous les deux demi-moules 4, 6. Ce fond 8 de moule comporte une empreinte 17 de la forme du fond du récipient à fabriquer et est déplaçable axialement selon un axe parallèle à la charnière 5 des deux demi-moules 4, 6.

Pour assurer un assemblage mécanique du fond 8 de moule avec les deux demi-moules, en position de fermeture du moule, qui soit capable de supporter les efforts engendrés par la pression élevée du soufflage, le fond 8 de moule est solidarisé par des moyens mutuellement emboîtables, tels que des moyens du type gorge/saillie. Dans l'exemple illustré à la [Fig.1], le fond 8 de moule comporte une saillie 19 radiale s'étendant sur tout ou partie de la périphérie latérale du fond de moule, dans la partie supérieure de celui-ci, la saillie 19 étant coiffée par les parties inférieures des demi-moules 4,6, lorsque les demi-moules sont dans leur position fermée, qui sont munies chacun d'une gorge en correspondance (non représenté).

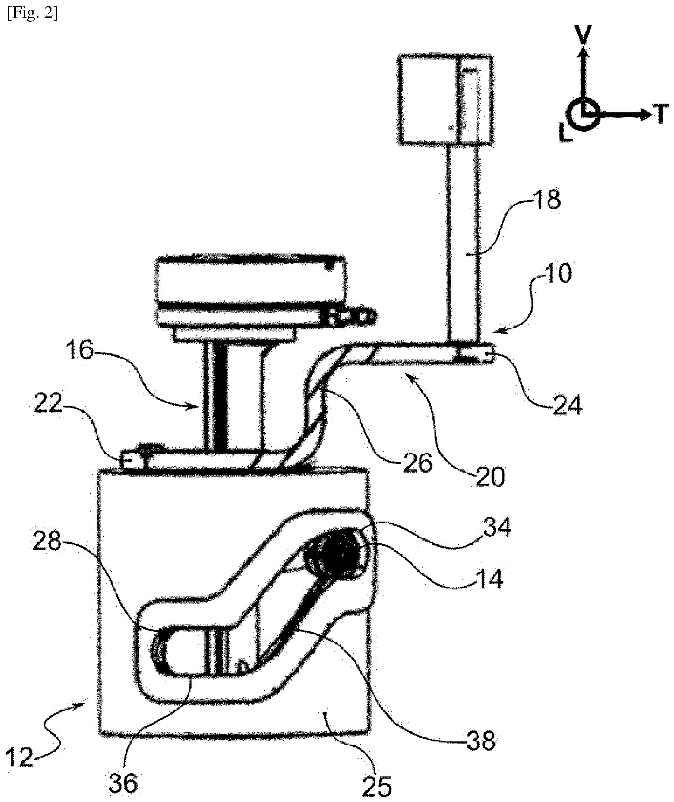

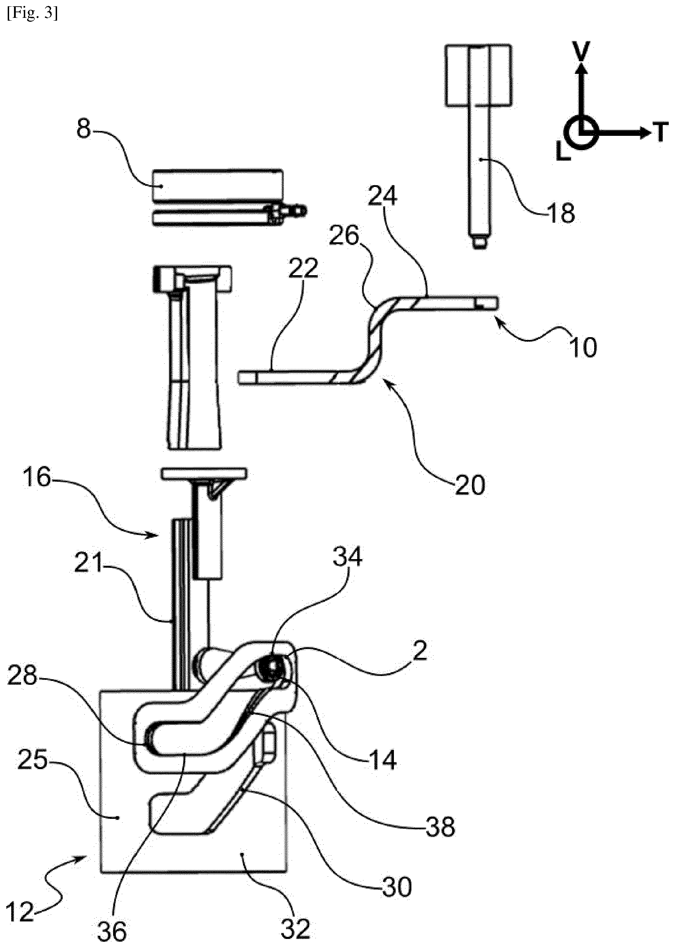

Comme illustré sur les figures 1 à 3, le fond 8 de moule est solidarisé à un support 16 vertical apte à se déplacer le long d'un axe vertical qui est coaxial à l'axe de révolution du moule.

Ledit support 16 vertical comprend une glissière constituée d'une partie fixe solidaire de la console 3, d'une partie mobile 21 dont l'extrémité supérieure est solidaire du fond 8 de moule et d'un galet 14 monté fou fixé en dessous du fond de moule sur la partie mobile 21.

Comme on peut le voir sur les figures 1 à 3, le support vertical peut avantageusement être réalisé en deux parties, à savoir la glissière et une entretoise 23 pour ajuster la distance entre le fond de moule et l'extrémité supérieure de la glissière, et l'entretoise 23 étant équipée d'un dispositif de démontage rapide du fond de moule.

Ledit galet 14 coopère avec une came 12 cylindrique qui est positionnée sous les demi-moules et sous le fond 8 de moule.

La came cylindrique comprend un élément fixe solidaire de la console 3 et un cylindre 25 creux d'axe vertical parallèle à l'axe du moule 2 dans lequel est positionné le support 16 vertical, ledit cylindre creux formant un élément mobile de la came 12 cylindrique et étant apte à être entraîné en rotation par rapport à son axe vertical. Ainsi, les axes du cylindre 25 creux, du support vertical, et du moule sont parallèles.

Il va de soi que l'axe du cylindre 25 creux peut être coaxial à l'axe du moule 2 sans pour autant sortir du cadre de l'invention.

La liaison entre la partie fixe de la came cylindrique et le cylindre creux est assurée par exemple par un roulement à bille 41.

Le cylindre 25 creux correspondant à l'élément mobile de la came cylindrique comprend un chemin 28 de came constitué d'un évidement 30 dans lequel se déplace le galet 14 monté fou.

Ledit chemin 28 de came comprend un profil continu qui se compose de trois parties :
- une des extrémités dudit profil comprend une première partie 34 sensiblement horizontale par rapport à l'axe vertical qui correspond au verrouillage et déverrouillage du fond de moule. Dans le cas illustré sur les différentes figures, la première partie 34 horizontale correspond à la partie horizontale supérieure, il s'agit de la partie correspondant à la position haute du fond 8 de moule, celui-ci doit atteindre sa position haute avant que les demi-moules ne se referment ;
- l'autre extrémité dudit profil comprend une deuxième partie 36 horizontale qui correspond à la partie horizontale inférieure, il s'agit de la partie correspondant à la position basse du fond 8 de moule, celle-ci permet de limiter la course de descente du fond de moule au juste nécessaire ;
- une troisième partie 38 comprise entre les deux extrémités est sensiblement inclinée par rapport à l'axe verticale, cette partie correspond au mouvement de monte et de baisse du support sur lequel est monté le fond de moule.

Ledit chemin 28 de came peut être fixé de manière amovible au cylindre 25 creux afin de pourvoir être changé dans le cas d'une opération de maintenance ou dans le cas d'un changement de format de récipient.

Une liaison mécanique 10 lie le demi-moule de droite 4 avec la came cylindrique de telle sorte que la fermeture et l'ouverture du moule provoque la montée et respectivement la baisse du fond 8 de moule.

La liaison mécanique comprend deux parties articulées constituées d'une tige 18 dont une des extrémités est fixée au niveau de la partie inférieure du demi-moule droit 4 et l'autre extrémité de la tige est liée à une bielle 20 de transmission dont une extrémité est articulée sur le dessus du cylindre 25 creux et l'autre extrémité est articulé à la tige 18.

La tige 18 est solidaire du demi-moule droit 4 au niveau de sa paroi externe et s'étend parallèlement à l'axe du moule en faisant saillie de l'extrémité inférieure dudit demi-moule, et l'extrémité opposée de la tige 18 est fixée à la bielle 20 de transmission qui présente une forme générale de S ou de Z et comprend deux branches 22, 24, horizontales reliées par une branche inclinée, la première branche 22 horizontale dont l'extrémité libre est articulée sur la partie supérieure du cylindre 25 creux formant la came cylindrique, et la seconde branche 24 horizontale s'étend au-dessus de la première branche 22 horizontale et dont l'extrémité libre est articulée à la tige 18.

On expliquera maintenant le fonctionnement du dispositif de moulage suivant l'invention en référence aux figures 1, 4 et 5.

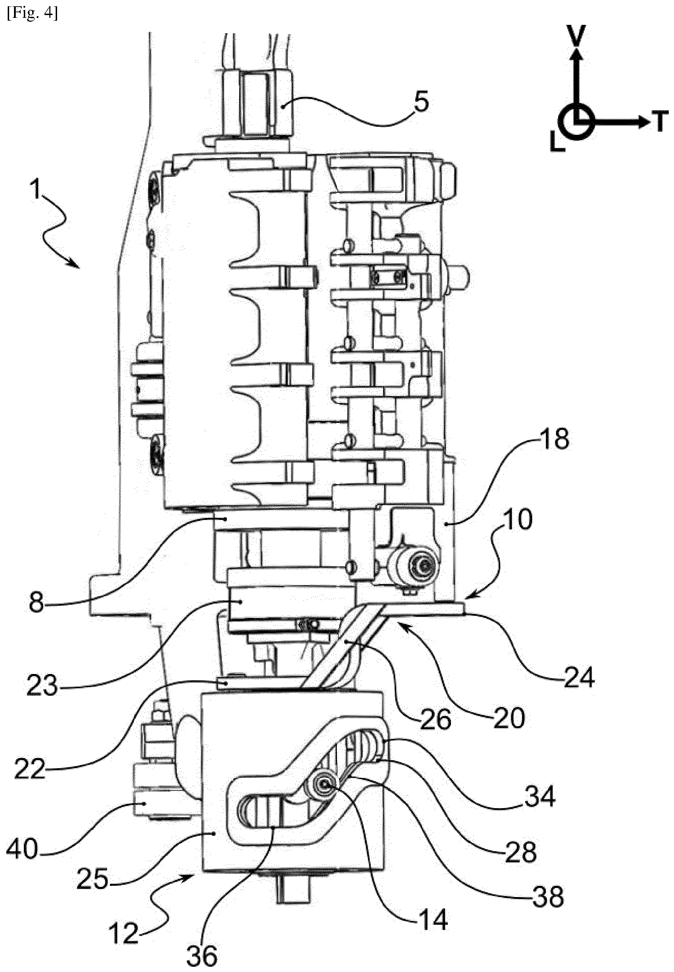

Le moule 2 étant initialement en position ouverte telle qu'illustrée sur la [Fig.1], on commence à fermer les demi-moules 4, 6 en les faisant pivoter autour de la charnière 5 par l'intermédiaire du mécanisme d'actionnement comprenant le galet 40 et la came (non représentée sur la figure) ou un moteur. En référence à la [Fig.4], le demi-moule droit 4 entraîne, par l'intermédiaire de la liaison mécanique (décrite précédemment) la came 12 cylindrique en une rotation sur elle-même. Dans ce cas, la came cylindrique est entrainée en rotation dans le sens horaire. Ce mouvement de rotation entraine le déplacement du galet 14 monté fou le long du chemin 28 de came. Il en résulte que le galet 14 monte sur la partie inclinée du chemin 28 de came. Ce déplacement du galet entraine la montée du support 16 vertical sur lequel est solidarisé le fond de moule vers les demi-moules 4,6.

Comme illustré à la [Fig.5], le moule atteint alors sa position fermée. Dans cette position fermée, les deux demi-moules 4,6 sont en contact l'un de l'autre. Le galet 14 est arrivé en butée dans la came 12 cylindrique au niveau de la première partie 34 sensiblement horizontale du chemin 28 de came qui correspondant, dans notre cas, au fond de moule en position haute donc en contact avec la partie inférieure des deux demi-moules 4, 6.

Il va de soi que le mouvement inverse est réalisé lors de l'ouverture du moule.

## Revendications

1. Dispositif (1) de moulage de récipients à partir de préformes en matériau thermoplastique par moulage avec soufflage ou étirage-soufflage, ledit dispositif comportant un moule (2) d'axe vertical, en trois parties, à savoir deux demi-moules (4,6) pour le corps du récipient et un fond (8) de moule pour le fond du récipient,
le passage d'une position dite de fermeture à une position dite d'ouverture des demi-moules (4,6) et inversement, est assuré par un système d'actionnement, et le mouvement de monte et de baisse du fond (8) de moule est assuré par une liaison (10) mécanique entre au moins un demi-moule (4,6) et le fond (8) de moule de telle sorte que la fermeture et l'ouverture du moule provoque la montée et respectivement la baisse du fond (8) de moule; **caractérisé en ce que** :
- une première extrémité de ladite liaison (10) mécanique est reliée à l'un des demi-moules (4,6), et l'extrémité opposée de la liaison (10) mécanique est reliée à une came (12) cylindrique positionnée en dessous du fond de moule,
- ladite came (12) cylindrique est montée mobile en rotation autour d'un axe vertical, ladite rotation de la came cylindrique étant obtenue par le mouvement d'ouverture ou de fermeture de l'un des demi-moules, et
- ladite came (12) cylindrique coopère avec au moins un galet (14) monté fou sur un support (16) vertical à l'extrémité supérieure duquel est solidarisé le fond (8) de moule, ledit support étant apte à se déplacer le long d'un axe vertical de sorte que la rotation de la came (12) cylindrique entraine en translation verticale le fond (8) de moule.

2. Dispositif (1) de moulage suivant la revendication 1 **caractérisé en ce que** ledit support (16) comprend des moyens pour se déplacer le long de son axe vertical qui est parallèle à l'axe du moule et à l'axe de la came (12) cylindrique.

3. Dispositif (1) de moulage suivant la revendication 2 **caractérisé en ce que** ladite liaison (10) mécanique comprend deux parties articulées :
- une tige (18) dont l'une des extrémités est fixée à l'un des demi-moules (4,6),
- une bielle (20) de transmission articulée à une première extrémité à la came (12) cylindrique et l'extrémité opposée à la tige (18).

4. Dispositif (1) de moulage suivant la revendication 3 **caractérisé en ce que** ladite tige (18) est solidaire d'une paroi externe du demi-moule (4,6) et s'étend parallèlement à cette dernière en faisant saillie de l'extrémité inférieure dudit demi-moule.

5. Dispositif (1) de moulage suivant l'une quelconque des revendications 3 ou 4 **caractérisé en ce que** ladite bielle (20) de transmission présente une forme générale de S ou de Z et comprend deux branches horizontales reliées par une branche inclinée, la première branche (22) horizontale dont l'extrémité libre est articulée à la génératrice de la came cylindrique, la seconde branche (24) horizontale s'étend au-dessus de la première branche horizontale et dont l'extrémité libre est articulée à la tige (18).

6. Dispositif (1) de moulage suivant l'une quelconque des revendications 1 à 5 **caractérisé en ce que** ladite came (12) cylindrique comprend un chemin (28) de came constitué d'un évidement (30) dans la paroi de la came (12) cylindrique et dans lequel est apte à se déplacer le galet (14) monté fou.

7. Dispositif (1) de moulage suivant la revendication 6 **caractérisé en ce que** ledit chemin (28) de came comprend un profil continu qui se compose d'au moins trois parties :
- une des extrémités dudit profil comprend une première partie (34) sensiblement horizontale par rapport à l'axe vertical qui correspondant au verrouillage et déverrouillage du fond de moule ;
- l'autre extrémité dudit profil comprend une deuxième partie (36) sensiblement horizontale par rapport à l'axe vertical ;
- une troisième partie (38) comprise entre les deux extrémités est sensiblement inclinée par rapport à l'axe verticale, cette partie correspond au mouvement de monte et de baisse du support sur lequel est monté le fond (8) de moule.

8. Dispositif (1) de moulage suivant l'une quelconque des revendications 1 à 7 **caractérisé en ce que** le système d'actionnement assurant le mouvement d'ouverture et de fermeture des demi-moules est un moteur électrique.

9. Dispositif (1) de moulage suivant l'une quelconque des revendications 1 à 7 **caractérisé en ce que** le système d'actionnement assurant le mouvement d'ouverture et de fermeture des demi-moules est un mécanisme mécanique réalisé par une came et un galet (40).

10. Liaison (10) mécanique pour monter et respectivement baisser un fond (8) de moule par rapport à un demi-moule (4,6) d'un dispositif (1) de moulage de récipients à partir de préformes en matériau thermoplastique par moulage avec soufflage ou étirage-soufflage, ledit dispositif (1) de moulage comportant un moule (2) d'axe vertical, en trois parties, à savoir deux demi-moules (4,6) pour le corps du récipient et un fond (8) de moule pour le fond du récipient ;**caractérisée en ce que** :
- ladite liaison (10) mécanique comprend deux parties articulées dont une première extrémité est apte à être reliée à l'un des demi-moules (4,6), et l'extrémité opposée de la liaison mécanique (10) est reliée à une came (12) cylindrique apte à être positionnée en dessous du fond (8) de moule,
- ladite came (12) cylindrique est montée mobile en rotation autour d'un axe vertical, ladite rotation de la came (12) cylindrique étant obtenue par le mouvement d'ouverture ou de fermeture de l'un des demi-moules, et
- ladite came (12) cylindrique étant apte à coopérer avec un galet (14) monté fou sur un support (16) vertical à l'extrémité supérieure duquel est solidarisé le fond (8) de moule, ledit support (16) étant apte à se déplacer le long d'un axe vertical de sorte que la rotation de la came (12) cylindrique entraine en translation verticale le fond de moule.

11. Liaison (10) mécanique suivant la revendication 10 **caractérisée en ce que** ledit support (16) comprend des moyens pour se déplacer le long de son axe vertical qui est parallèle à l'axe de la came (12) cylindrique.

12. Liaison (10) mécanique suivant la revendication 10 **caractérisée en ce que** les deux parties articulées de ladite liaison (10) mécanique comprend :
- une tige (18) dont l'une des extrémités est apte à être fixée à l'un des demi-moules (4,6),
- une bielle (20) de transmission articulée à une première extrémité à la came (12) cylindrique et l'extrémité opposée à la tige (18).

13. Liaison (10) mécanique suivant la revendication 12 **caractérisée en ce que** ladite bielle (20) de transmission présente une forme générale de S ou de Z et comprend deux branches horizontales reliées par une branche inclinée, la première branche (22) horizontale dont l'extrémité libre est articulée à la génératrice de la came (12) cylindrique, la seconde branche (24) horizontale s'étend au-dessus de la première branche horizontale et dont l'extrémité libre est articulée à la tige.

14. Liaison (10) mécanique suivant l'une quelconque des revendications 10 à 13 **caractérisée en ce que** ladite came (12) cylindrique comprend un chemin (28) de came constitué d'un évidement dans la paroi de la came (12) cylindrique et dans lequel est apte à se déplacer le galet (14) monté fou.

15. Liaison (10) mécanique suivant la revendication 14 **caractérisée en ce que** ledit chemin (28) de came comprend un profil continu qui se compose d'au moins trois parties :
- une des extrémités dudit profil comprend une première partie (34) sensiblement horizontale par rapport à l'axe vertical qui correspondant au verrouillage et déverrouillage du fond de moule ;
- l'autre extrémité dudit profil comprend une deuxième partie (36) sensiblement horizontale par rapport à l'axe vertical ;
- une troisième partie (38) comprise entre les deux extrémités est sensiblement inclinée par rapport à l'axe verticale, cette partie correspond au mouvement de monte et de baisse du support sur lequel est monté le fond (8) de moule.

## Patentansprüche

1. Vorrichtung (1) zum Formen von Behältern aus Vorformlingen aus thermoplastischem Material durch Blasformen oder Streckblasformen, wobei die Vorrichtung eine Form (2) mit vertikaler Achse aus drei Teilen aufweist, nämlich aus zwei Formhälften (4, 6) für den Körper des Behälters und einem Formboden (8) für den Boden des Behälters,
wobei der Übergang aus einer sogenannten Schließposition zu einer sogenannten Öffnungsposition der Formhälften (4, 6) und umgekehrt durch ein Betätigungssystem sichergestellt wird und die Aufwärts- und Abwärtsbewegung des Formbodens (8) durch eine mechanische Verbindung (10) zwischen mindestens einer Formhälfte (4, 6) und dem Formboden (8) sichergestellt wird, derart, dass das Schließen und das Öffnen der Form das Anheben bzw. das Absenken des Formbodens (8) bewirkt; **dadurch gekennzeichnet, dass**:
- ein erstes Ende der mechanischen Verbindung (10) mit einer der Formhälften (4, 6) verbunden ist und das entgegengesetzte Ende der mechanischen Verbindung (10) mit einem zylindrischen Nocken (12) verbunden ist, der unterhalb des Formbodens positioniert ist,
- der zylindrische Nocken (12) drehbeweglich um eine vertikale Achse gelagert ist, wobei die Drehung des zylindrischen Nockens durch die Öffnungs- oder Schließbewegung der einen der Formhälften bewirkt wird, und
- der zylindrische Nocken (12) mit mindestens einer Rolle (14) zusammenwirkt, die frei drehend auf einem vertikalen Träger (16) gelagert ist, mit dessen oberem Ende der Formboden (8) fest verbunden ist, wobei der Träger geeignet ist, sich entlang einer vertikalen Achse zu verlagern, derart, dass die Drehung des zylindrischen Nockens (12) den Formboden (8) in vertikaler Translation antreibt.

2. Vorrichtung (1) zum Formen nach Anspruch 1, **dadurch gekennzeichnet, dass** der Träger (16) Mittel umfasst, um sich entlang seiner vertikalen Achse zu verlagern, die parallel zur Achse der Form und zur Achse des zylindrischen Nockens (12) ist.

3. Vorrichtung (1) zum Formen nach Anspruch 2, **dadurch gekennzeichnet, dass** die mechanische Verbindung (10) zwei gelenkig verbundene Teile umfasst:
- eine Stange (18), von der eines der Enden an einer der Formhälften (4, 6) befestigt ist,
- eine Übertragungsstange (20), die an einem ersten Ende an dem zylindrischen Nocken (12) und am entgegengesetzten Ende an der Stange (18) angelenkt ist.

4. Vorrichtung (1) zum Formen nach Anspruch 3, **dadurch gekennzeichnet, dass** die Stange (18) mit einer Außenwand der Formhälfte (4, 6) fest verbunden ist und sich parallel zu dieser Letzteren erstreckt, wobei sie vom unteren Ende dieser Formhälfte vorsteht.

5. Vorrichtung (1) zum Formen nach einem der Ansprüche 3 oder 4, **dadurch gekennzeichnet, dass** die Übertragungsstange (20) im Wesentlichen eine S-Form oder Z-Form aufweist und zwei durch einen geneigten Schenkel verbundene horizontale Schenkel umfasst, den ersten horizontalen Schenkel (22), dessen freies Ende an die Erzeugende des zylindrischen Nockens angelenkt ist, und den zweiten horizontalen Schenkel (24), der sich oberhalb des ersten horizontalen Schenkels erstreckt und dessen freies Ende an die Stange (18) angelenkt ist.

6. Vorrichtung (1) zum Formen nach einem der Ansprüche 1 bis 5, **dadurch gekennzeichnet, dass** der zylindrische Nocken (12) eine Nockenbahn (28) umfasst, die aus einer Vertiefung (30) in der Wand des zylindrischen Nockens (12) besteht und in der sich die frei drehend gelagerte Rolle (14) bewegen kann.

7. Vorrichtung (1) zum Formen nach Anspruch 6, **dadurch gekennzeichnet, dass** die Nockenbahn (28) ein durchgehendes Profil umfasst, das aus mindestens drei Teilen besteht:
- eines der Enden des Profils umfasst einen ersten Teil (34), der im Wesentlichen horizontal in Bezug auf die vertikale Achse ist, die der Verriegelung und Entriegelung des Formbodens entspricht;
- das andere Ende des Profils umfasst einen zweiten Teil (36), der im Wesentlichen horizontal in Bezug auf die vertikale Achse ist;
- ein dritter Teil (38), der zwischen den zwei Enden liegt, ist im Wesentlichen in Bezug auf die vertikale Achse geneigt, dieser Teil entspricht der Anhebe- und Absenkbewegung des Trägers, an dem der Formboden (8) angebracht ist.

8. Vorrichtung (1) zum Formen nach einem der Ansprüche 1 bis 7, **dadurch gekennzeichnet, dass** das Betätigungssystem, das die Öffnungs- und Schließbewegung der Formhälften sicherstellt, ein Elektromotor ist.

9. Vorrichtung (1) zum Formen nach einem der Ansprüche 1 bis 7, **dadurch gekennzeichnet, dass** das Betätigungssystem, das die Öffnungs- und Schließbewegung der Formhälften sicherstellt, ein mechanischer Mechanismus ist, der durch einen Nocken und eine Rolle (40) realisiert ist.

10. Mechanische Verbindung (10) zum Anheben bzw. Absenken eines Formbodens (8) in Bezug auf eine Formhälfte (4, 6) einer Vorrichtung (1) zum Formen von Behältern aus Vorformlingen aus thermoplastischem Material durch Blasformen oder Streckblasformen, wobei die Vorrichtung (1) zum Formen eine Form (2) mit vertikaler Achse aus drei Teilen aufweist, nämlich zwei Formhälften (4, 6) für den Körper des Behälters und einem Formboden (8) für den Boden des Behälters; **dadurch gekennzeichnet, dass**:
- die mechanische Verbindung (10) zwei gelenkig verbundene Teile umfasst, von denen ein erstes Ende mit einer der Formhälften (4, 6) verbindbar ist und das entgegengesetzte Ende der mechanischen Verbindung (10) mit einem zylindrischen Nocken (12) verbunden ist, der unterhalb des Formbodens (8) positionierbar ist,
- der zylindrische Nocken (12) drehbeweglich um eine vertikale Achse gelagert ist, wobei die Drehung des zylindrischen Nockens (12) durch die Öffnungs- oder Schließbewegung der einen der Formhälften bewirkt wird, und
- wobei der zylindrische Nocken (12) geeignet ist, mit einer Rolle (14) zusammenzuwirken, die frei drehend auf einem vertikalen Träger (16) gelagert ist, mit dessen oberem Ende der Formboden (8) fest verbunden ist, wobei der Träger (16) geeignet ist, sich entlang einer vertikalen Achse zu verlagern, derart, dass die Drehung des zylindrischen Nockens (12) den Formboden in vertikaler Translation antreibt.

11. Mechanische Verbindung (10) nach Anspruch 10, **dadurch gekennzeichnet, dass** der Träger (16) Mittel umfasst, um sich entlang seiner vertikalen Achse zu verlagern, die parallel zur Achse des zylindrischen Nockens (12) ist.

12. Mechanische Verbindung (10) nach Anspruch 10, **dadurch gekennzeichnet, dass** die zwei gelenkig verbundenen Teile der mechanischen Verbindung (10) umfassen:
- eine Stange (18), von der eines der Enden an einer der Formhälften (4, 6) befestigbar ist,
- eine Übertragungsstange (20), die an einem ersten Ende an dem zylindrischen Nocken (12) und am entgegengesetzten Ende an der Stange (18) angelenkt ist.

13. Mechanische Verbindung (10) nach Anspruch 12, **dadurch gekennzeichnet, dass** die Übertragungsstange (20) im Wesentlichen eine S-Form oder Z-Form aufweist und zwei durch einen geneigten Schenkel verbundene horizontale Schenkel umfasst, den ersten horizontalen Schenkel (22), dessen freies Ende an die Erzeugende des zylindrischen Nockens (12) angelenkt ist, und den zweiten horizontalen Schenkel (24), der sich oberhalb des ersten horizontalen Schenkels erstreckt und dessen freies Ende an die Stange angelenkt ist.

14. Mechanische Verbindung (10) nach einem der Ansprüche 10 bis 13, **dadurch gekennzeichnet, dass** der zylindrische Nocken (12) eine Nockenbahn (28) umfasst, die aus einer Vertiefung in der Wand des zylindrischen Nockens (12) besteht und in der sich die frei drehend gelagerte Rolle (14) bewegen kann.

15. Mechanische Verbindung (10) nach Anspruch 14, **dadurch gekennzeichnet, dass** die Nockenbahn (28) ein durchgehendes Profil umfasst, das aus mindestens drei Teilen besteht:
- eines der Enden des Profils umfasst einen ersten Teil (34), der im Wesentlichen horizontal in Bezug auf die vertikale Achse ist, die der Verriegelung und Entriegelung des Formbodens entspricht;
- das andere Ende des Profils umfasst einen zweiten Teil (36), der im Wesentlichen horizontal in Bezug auf die vertikale Achse ist;
- ein dritter Teil (38), der zwischen den zwei Enden liegt, ist im Wesentlichen in Bezug auf die vertikale Achse geneigt, dieser Teil entspricht der Anhebe- und Absenkbewegung des Trägers, an dem der Formboden (8) angebracht ist.

## Claims

1. Device (1) for moulding containers from thermoplastic preforms by blow-moulding or stretch blow-moulding, said device comprising a vertical-axis mould (2) in three parts, namely two half-moulds (4, 6) for the body of the container and a mould bottom (8) for the bottom of the container,
the passage from a so-called closed position to a so-called open position of the half-moulds (4, 6), and vice versa, being provided by an actuating system, and the raising and lowering movement of the mould bottom (8) being provided by a mechanical connection (10) between at least one half-mould (4, 6) and the mould bottom (8) in such a way that the closing and opening of the mould causes the raising and respectively lowering of the mould bottom (8); **characterized in that**:
- a first end of said mechanical connection (10) is connected to one of the half-moulds (4, 6), and the opposite end of the mechanical connection (10) is connected to a cylindrical cam (12) positioned below the mould bottom,
- said cylindrical cam (12) is mounted so as to be rotatable about a vertical axis, said rotation of the cylindrical cam being obtained by the opening or closing movement of one of the half-moulds, and
- said cylindrical cam (12) cooperates with at least one roller (14) idly mounted on a vertical support (16), to the upper end of which the mould bottom (8) is secured, said support being able to move along a vertical axis such that the rotation of the cylindrical cam (12) causes the mould bottom (8) to translate vertically.

2. Moulding device (1) according to Claim 1, **characterized in that** said support (16) comprises means for moving along its vertical axis which is parallel to the axis of the mould and to the axis of the cylindrical cam (12).

3. Moulding device (1) according to Claim 2, **characterized in that** said mechanical connection (10) comprises two articulated parts:
- a rod (18), one of the ends of which is fixed to one of the half-moulds (4, 6),
- a transmission link (20) articulated at a first end to the cylindrical cam (12) and at the opposite end to the rod (18).

4. Moulding device (1) according to Claim 3, **characterized in that** said rod (18) is secured to an external wall of the half-mould (4, 6) and extends parallel to the latter, projecting from the lower end of said half-mould.

5. Moulding device (1) according to either one of Claims 3 and 4, **characterized in that** said transmission link (20) is generally S- or Z-shaped and comprises two horizontal branches connected by an inclined branch, the first horizontal branch (22) whose free end is articulated to the generatrix of the cylindrical cam, the second horizontal branch (24) extending above the first horizontal branch and whose free end is articulated to the rod (18).

6. Moulding device (1) according to any one of Claims 1 to 5, **characterized in that** said cylindrical cam (12) comprises a camway (28) formed by a cutout (30) in the wall of the cylindrical cam (12) and in which the idly mounted roller (14) is able to move.

7. Moulding device (1) according to Claim 6, **characterized in that** said camway (28) comprises a continuous profile which is composed of at least three parts:
- one of the ends of said profile comprising a first part (34) substantially horizontal with respect to the vertical axis which corresponds to the locking and unlocking of the mould bottom;
- the other end of said profile comprising a second part (36) substantially horizontal with respect to the vertical axis;
- a third part (38) contained between the two ends being substantially inclined with respect to the vertical axis, this part corresponding to the raising and lowering movement of the support on which the mould bottom (8) is mounted.

8. Moulding device (1) according to any one of Claims 1 to 7, **characterized in that** the actuating system providing the opening and closing movement of the half-moulds is an electric motor.

9. Moulding device (1) according to any one of Claims 1 to 7, **characterized in that** the actuating system providing the opening and closing movement of the half-moulds is a mechanical mechanism realized by a cam and a roller (40).

10. Mechanical connection (10) for raising and respectively lowering a mould bottom (8) with respect to a half-mould (4, 6) of a device (1) for moulding containers from thermoplastic preforms by blow-moulding or stretch blow-moulding, said moulding device (1) comprising a vertical-axis mould (2) in three parts, namely two half-moulds (4, 6) for the body of the container and a mould bottom (8) for the bottom of the container; **characterized in that**:
- said mechanical connection (10) comprises two articulated parts, a first end of which is able to be connected to one of the half-moulds (4, 6), and the opposite end of the mechanical connection (10) is connected to a cylindrical cam (12) able to be positioned below the mould bottom (8),
- said cylindrical cam (12) is mounted so as to be rotatable about a vertical axis, said rotation of the cylindrical cam (12) being obtained by the opening or closing movement of one of the half-moulds, and
- said cylindrical cam (12) being able to cooperate with a roller (14) mounted idly on a vertical support (16), to the upper end of which the mould bottom (8) is secured, said support (16) being able to move along a vertical axis such that the rotation of the cylindrical cam (12) causes the mould bottom to translate vertically.

11. Mechanical connection (10) according to Claim 10, **characterized in that** said support (16) comprises means for moving along its vertical axis which is parallel to the axis of the cylindrical cam (12).

12. Mechanical connection (10) according to Claim 10, **characterized in that** the two articulated parts of said mechanical connection (10) comprise:
- a rod (18), one of the ends of which is able to be fixed to one of the half-moulds (4, 6),
- a transmission link (20) articulated at a first end to the cylindrical cam (12) and at the opposite end to the rod (18).

13. Mechanical connection (10) according to Claim 12, **characterized in that** said transmission link (20) is generally S- or Z-shaped and comprises two horizontal branches connected by an inclined branch, the first horizontal branch (22) whose free end is articulated to the generatrix of the cylindrical cam (12), the second horizontal branch (24) extending above the first horizontal branch and whose free end is articulated to the rod.

14. Mechanical connection (10) according to any one of Claims 10 to 13, **characterized in that** said cylindrical cam (12) comprises a camway (28) formed by a cutout in the wall of the cylindrical cam (12) and in which the idly mounted roller (14) is able to move.

15. Mechanical connection (10) according to Claim 14, **characterized in that** said camway (28) comprises a continuous profile which is composed of at least three parts:
- one of the ends of said profile comprising a first part (34) substantially horizontal with respect to the vertical axis which corresponds to the locking and unlocking of the mould bottom;
- the other end of said profile comprising a second part (36) substantially horizontal with respect to the vertical axis;
- a third part (38) contained between the two ends being substantially inclined with respect to the vertical axis, this part corresponding to the raising and lowering movement of the support on which the mould bottom (8) is mounted.
